# EUROPÄISCHE PATENTSCHRIFT

(11) **EP 1 454 079 B1**
(45) Veröffentlichungstag und Bekanntmachung des Hinweises auf die Patenterteilung: **16.11.2005**
(21) Anmeldenummer: 02792948.8
(22) Anmeldetag: 10.12.2002
(51) Int. Cl.: F16H 1/28, B81B 5/00

(54) **MIKROGETRIEBE NACH DEM SPANNUNGSWELLEN-PRINZIP MIT HOHLWELLEN**
MICRO GEAR SYSTEM OPERATING ACCORDING TO THE VOLTAGE RIPPLE PRINCIPLE WITH HOLLOW SHAFTS
MICRO-ENGRENAGE CONNU SELON LE PRINCIPE DE L'ENGRENAGE A ONDES DE CONTRAINTE ET COMPRENANT DES ARBRES CREUX

(30) Priorität: 14.12.2001 DE 10161493
(43) Veröffentlichungstag der Anmeldung: 08.09.2004
(73) Patentinhaber: Micromotion GmbH, 55124 Mainz-Gonsenheim (DE)
(72) Erfinder: DEGEN, Reinhard, 55128 Mainz (DE); SLATTER, Rolf, 65551 Limburg-Lindenholzhausen (DE)
(74) Vertreter: Müller, Eckhard
(86) Internationale Anmeldenummer: PCT/EP2002/013986
(87) Internationale Veröffentlichungsnummer: WO 2003/052293

(56) Entgegenhaltungen:
- DE-A- 19 714 528
- R. DEGEN, W EHRFELD, F. MICHEL: "Pancake shaped micro gear system with high transmission ratio" PROCEEDINGS OF ACTUATOR 2000, 19. - 21. Juni 2000, Seiten 185-188, XP008015661 Bremen in der Anmeldung erwähnt
- PATENT ABSTRACTS OF JAPAN vol. 2002, no. 02, 2. April 2002 (2002-04-02) -& JP 2001 289394 A (JAPAN SERVO CO LTD), 19. Oktober 2001 (2001-10-19) -& US 2001/052735 A1 (MASAFUMI SAKAMOTO) 20. Dezember 2001 (2001-12-20)
- PATENT ABSTRACTS OF JAPAN vol. 2002, no. 02, 2. April 2002 (2002-04-02) -& JP 2001 304382 A (HARMONIC DRIVE SYST IND CO LTD), 31. Oktober 2001 (2001-10-31) -& DE 101 20 419 A (HARMONIC DRIVE SYSTEMS) 21. März 2002 (2002-03-21)
- PATENT ABSTRACTS OF JAPAN vol. 013, no. 071 (M-799), 17. Februar 1989 (1989-02-17) -& JP 63 270946 A (SUMITOMO HEAVY IND LTD), 8. November 1988 (1988-11-08)
- PATENT ABSTRACTS OF JAPAN vol. 2002, no. 12, 12. Dezember 2002 (2002-12-12) -& JP 2002 221259 A (IZUMO CORPORATION:KK), 9. August 2002 (2002-08-09)
- R. DEGEN: "Micro Harmonic Drive: innovative Antriebstechnik miniaturisiert mit LIGA" PROCEEDINGS OF INNOVATIVE KLEIN- UND MIKROANTRIEBE, 15. - 16. Mai 2001, Seiten 89-94, XP008015662 Mainz in der Anmeldung erwähnt

## Beschreibung

Die Erfindung betrifft ein Getriebe, insbesondere Mikrogetriebe bevorzugt nach dem Prinzip des Spannungswellen-Getriebes, Wolfrom-Getriebes oder dergleichen Umlaufrädergetriebe in Flachbauweise, welches ein Planetengetriebe bestehend aus einem Sonnenrad und wenigstens zwei mit dem Sonnenrad in Eingriff stehenden Planetenrädern aufweist, wobei das Sonnenrad drehfest auf einer zentrisch bezüglich einer Getriebemittellängsachse angeordneten Antriebswelle sitzt oder Bestandteil dieser Antriebswelle ist, die Planetenräder mit einer Verzahnung in Eingriff stehen, die drehfest mit einer Abtriebswelle verbunden ist, welche zentrisch bezüglich der Getriebemittellängsachse angeordnet ist.

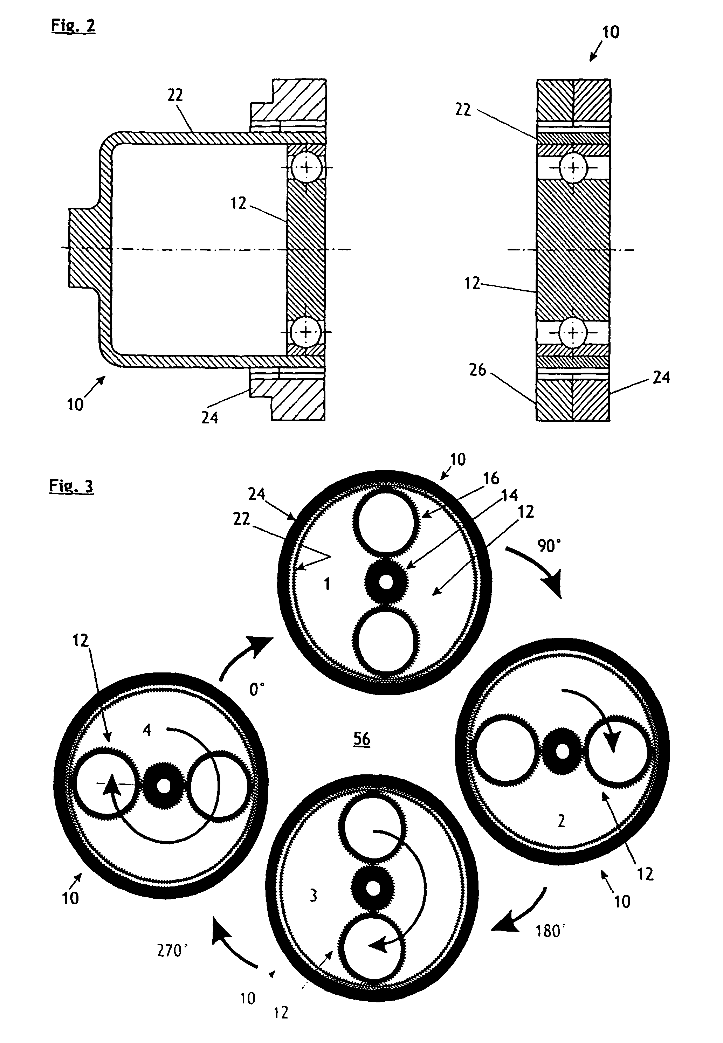

Derartige Getriebe sind bereits aus dem Stand der Technik, beispielsweise Proceedings of Actuator 2000, 19.-21. Juni, Bremen, Autoren R. Degen, W. Ehrfeld, F. Michel "Pancake shaped micro gear system with high transmission ratio", das Micro Harmonic Drive der Micromotion GmbH: Ein Präzisionsmikrogetriebe für Positionieraufgaben, R. Degen, F. Michel, F&M 109 (2001), Nr. 6, 48 bis 50 bzw. Proceedings of innovative Klein- und Mikroantriebe, 15.-16. Mai Mainz, 2001, R. Degen "Micro Harmonic-Drive: innovative Antriebstechnik miniaturisiert mit LIGA" bekannt. Beispiele derartiger bekannte Mikrogetriebe nach dem Spannungswellen-Getriebe, zum Beispiel Harmonic Drive(eingetragene Marke)-Prinzip sind auch in den Figuren 2a, b sowie Figur 3 dargestellt und werden nachfolgend hinsichtlich der prinzipiellen Funktionsweise kurz erläutert.

Das Getriebeprinzip eines Spannungswellen-Getriebes 56 hebt sich gegenüber anderen Bauformen, wie zum Beispiel Stirnradstandgetrieben und Planetengetrieben, durch seine präzisen und spielfreien Übertragungseigenschaften ab. Diese besonderen Eigenschaften stellt das Harmonic Drive-Prinzip schon seit längerem in der Robotik, dem Werkzeugmaschinenbau, in Meßgeräten, in der Luft- und Raumfahrt und in der Medizintechnik unter Beweis. Harmonic Drive-Getriebe lassen sich nach ihrer Ausführungsform in Topfgetriebe (Figur 2a) und Flachgetriebe (Figur 2b) einteilen. Die Flachbauweise dieses Getriebeprinzips bietet besonders im Hinblick auf Mikroantriebssysteme große Vorteile, wie die geringe Anzahl der benötigten Komponenten, eine kompakte Bauform und die für Mikromotoren benötigte Übersetzungshöhe, welche mit einer einzigen Getriebestufe erzielt werden kann. Die Basiselemente des Harmonic Drive-Getriebes in Flachbauweise setzen sich zusammen aus dem Wavegenerator 12 und den Zahnrädern Flex-Spline 22, Circular-Spline 24 und Dynamic-Spline 26. Wie aus Figur 3 ersichtlich, ist der Wavegenerator 12 bei Harmonic Drive-Getrieben in Flachbauweise bevorzugt durch ein Planetengetriebe bestehend aus einem zentralen Sonnenrad 14 und zwei oder mehreren, mit der Verzahnung des Sonnenrades 14 in Eingriff stehenden Planetenrädern 16 gebildet, die ihrerseits mit der Innenverzahnung des Flex-Spline 22 in Eingriff stehen.

Das Grundprinzip eines Harmonic Drive-Getriebes besteht darin, daß der Wavegenerator 12 den Flex-Spline 22 in mindestens zwei oder mehr Bereichen elliptisch nach außen verformt. Dadurch hat der Flex-Spline 22 des Getriebes in den zwei nach außen verformten Bereichen gleichzeitig Zahneingriff mit den beiden Hohlrädern Circular-Spline 24 und Dynamic-Spline 26. In den Bereichen der kleinen Halbachse des elliptisch verformten Flex-Splines steht dieser nicht in Zahneingriff mit Circular-Spline 24 beziehungsweise Dynamic-Spline 26.

Bei Drehung des Sonnenrades 14 des Wavegenerators 12 wandern gemäß den unterschiedlichen Winkeldarstellungen der Figur 3 die Zahneingriffsbereiche des Flex-Spline 22 mit der Winkelstellung der beiden Planetenräder 16 vom Wavegenerator. Aus dem Zähnezahlunterschied von beispielsweise zwei Zähnen zwischen Flex-Spline 22 und Circular-Spline 24 resultiert die Relativbewegung zwischen diesen Zahnrädern. Bei einem vollen Umlauf der Planetenräder 16 des Wavegenerators verdreht sich der Flex-Spline 22 gegenüber dem Circular-Spline 24 um den Zähnezahlunterschied dieser beiden Zahnräder. Der Dynamic-Spline 26 dient bei der Flachbauweise als Abtriebselement und besitzt dieselbe Zähnezahl wie der Flex-Spline 22 und daher auch dieselbe Drehzahl und Drehrichtung.

Die Verwendung eines Planetengetriebes als Wavegenerator 12 bietet im Hinblick auf den Miniaturisierungsgrad des Mikrogetriebes die Vorteile, daß die Herstellung aller Getriebekomponenten hochpräzise mit dem LIGA-Verfahren erfolgen kann, der Montageaufwand verringert wird, da der Wavegenerator nur aus drei Elementen besteht, die Gesamtübersetzung des Getriebes durch das Planetengetriebe erhöht wird, so daß durch ein derartiges Getriebe in einer einzigen Stufe die sehr hohen Drehzahlen von Mikromotoren flexibel an die individuellen Erfordernisse angepaßt werden können und diese Variante des Wavegenerators 12 eine sehr geringe Massenträgheit besitzt, wodurch hochdynamische Positioniervorgänge ermöglicht werden.

Ausgehend von derartigen Getrieben beziehungsweise Mikrogetrieben der eingangs genannten Art liegt der Erfindung die Aufgabe zugrunde, durch das Getriebe hindurch Informationen zu leiten beziehungsweise Medien zu fördern.

Ausgehend von dem Getriebe mit den eingangs genannten Merkmalen wird diese Aufgabe im wesentlichen dadurch gelöst, daß die Antriebswelle und Abtriebswelle jeweils als Hohlwelle mit durchgängiger Bohrung beziehungsweise durchgängigem Kanal ausgebildet sind.

Aufgrund dieser erfindungsgemäßen Merkmale besteht die Möglichkeit, Laser, optische Fasern, Wellen, Versorgungsleitungen oder dergleichen auf der zentralen, rotatorischen Achse, der Getriebemittellängsachse, durch das Getriebe hindurchzuführen beziehungsweise Medien zu fördern. So ist es beispielsweise möglich, ein Vakuum für Greifaufgaben oder Handlingmaßnahmen durch das Getriebe zentral hindurch zu leiten. Ebenso besteht die Möglichkeit, daß Sensoren durch das Getriebe hindurchschauen können und Gegenstände auf der gegenüberliegenden Getriebeseite detektieren können. Dies ist bei herkömmlichen, mehrstufigen Getrieben beziehungsweise Mikrogetrieben in der Regel nicht möglich, da die zentrale Bohrung gleichzeitig durch mehrere hintereinander geschaltete Getriebestufen verlaufen müßte, deren Zahnräder beziehungsweise Getriebeteile eine gemeinsame zentrale Drehachse im allgemeinen nicht besitzen. Bei dem erfindungsgemäßen Mikrogetriebe ist trotz der sehr hohen Übersetzung im Bereich von ca. 100 bis 1.500 mit einer einzigen Getriebestufe eine zentrale Drehachse für das Getriebe vorhanden, so daß durch die Bohrung der Antriebswelle beziehungsweise durch eine Bohrung des Sonnenrades sowie die Bohrung der Abtriebswelle Informationen beziehungsweise Medien durch den durch diese Bohrungen gebildeten Kanal durch das Getriebe hindurchgeleitet werden können. In der Regel ist dieser Kanal konzentrisch mit der Drehachse von Antriebs- und Abtriebswelle.

Nach einer ersten vorteilhaften Ausgestaltung der Erfindung taucht die Antriebswelle mit einem freien, zur Abtriebswelle weisenden Endabschnitt in die Bohrung der Abtriebswelle ein.

Aufgrund dieser Maßnahme besteht die Möglichkeit, die Antriebswelle in der Abtriebswelle zu führen beziehungsweise zu lagern sowie gegebenenfalls weitere Maßnahmen vorzusehen, um beispielsweise eine Abdichtung im Überlappungsbereich zwischen Antriebs- und Abtriebswelle vorzusehen.

Weiterhin erweist es sich als vorteilhaft, daß der freie Endabschnitt der Antriebswelle von einer in der Bohrung der Abtriebswelle sitzenden Buchse aufgenommen ist. Mittels der Buchse kann eine individuelle Anpassung beziehungsweise Abstimmung der Außenabmessungen der Antriebswelle im Bereich des freien Endabschnittes sowie der Innenabmessungen der Abtriebswelle erfolgen.

Von besonderem Vorteil ist zwischen der Antriebswelle und der Abtriebswelle ein Dichtungssystem angeordnet, so daß fluide Medien durch die Hohlwellen gefördert werden können. Insoweit kann aufgrund dieser Maßnahme auf zusätzliche Maßnahmen wie Schläuche oder Rohrleitungen verzichtet werden, da die sich relativ zueinander drehende Abtriebswelle und Antriebswelle bereits gegeneinander abgedichtet sind.

Um die insbesondere bei Mikrogetrieben äußerst unerwünschten Reibungsmomente weitestgehend zu vermeiden, ist es nach einer anderen vorteilhaften Ausgestaltung der Erfindung vorgesehen, daß das Dichtungssystem als berührungslose Dichtung, bevorzugt als Labyrinthdichtung ausgebildet ist, wobei bevorzugt mehrere bezüglich der Getriebemittellängsachse versetzt angeordnete Ringnuten in der Außenwandung der Antriebswelle oder Innenwandung der Buchse beziehungsweise der Abtriebswelle angeordnet sind.

Nach einer weiteren vorteilhaften Ausgestaltung der Erfindung ist es vorgesehen, daß Antriebswelle und/oder Abtriebswelle in einem Gehäuse des Getriebes mittels Drehlagern, insbesondere bevorzugt O-verspannten Radialrillenkugellagern gelagert sind.

Auch durch diese Maßnahme werden die in dem Getriebe auftretenden Reibungsmomente auf ein Minimum reduziert. Auch werden durch diese Maßnahme die Rundlaufgenauigkeit der An- und Abtriebswelle verbessert, so daß das Mikrogetriebe eine hohe Wiederholgenauigkeit, konstante momentane Übertragungseigenschaften und eine hohe Lebenserwartung aufweist.

Nach einer anderen vorteilhaften Weiterbildung sind die Planetenräder als Ring ausgebildet, die in radialer Richtung Federelastizität besitzen. Aufgrund des Einsatzes elastischer Planetenräder wird das Zahnflankenspiel eliminiert und ein praktisch spielfreies Getriebe geschaffen. Auch können durch diese Maßnahme Fertigungsungenauigkeiten, Verschleiß und Probleme aufgrund von Verschmutzung kompensiert werden.

Ein konstruktiv einfacher Aufbau des Getriebes ergibt sich auch dadurch, daß das Gehäuse des Getriebes aus zwei Gehäuseteilen besteht, die bevorzugt ringförmig ausgebildet sind, topfartig ineinandergreifen und zwischen sich den Wavegenerator, Sonnen- und Planetenräder sowie Flex-, Circular- und Dynamic-Spline aufnehmen.

Nach einem anderen Gedanken der Erfindung weist das als Mikrogetriebe ausgebildete Getriebe einen Durchmesser von weniger als 10 mm und/oder eine Höhe von ca. 1 mm und/oder einer Übersetzung von ca. 100 bis ca. 1.500 und/oder einem Zahnmodul von kleiner 100 µm auf.

Auch erweist es sich als vorteilhaft, ein derartiges erfindungsgemäßes Mikrogetriebe mittels des LIGA-Verfahrens herzustellen, wie dies beispielsweise in Radiat, Phys. und chemistry 45 (1995), Nr. 3, 349 bis 365, W. Ehrfeld, H. Lehr, "Deep X-ray Lithography for the Produktion of three-dimensional Microstructures from Metals, Polymers and Ceramics, beschrieben ist.

Sofern das erfindungsgemäße Getriebe als spannungswellen-Getriebe ausgebildet ist, bietet es sich an, daß die Planetenräder mit einer Innenverzahnung eines ringförmigen Flex-Spline in Eingriff stehen.

Weiterhin erweist es sich als vorteilhaft, daß der Flex-Spline eine Außenverzahnung aufweist, die mit der Innenverzahnung eines ringförmigen Circular-Spline sowie der Innenverzahnung eines ringförmigen Dynamic-Spline in Eingriff steht.

Von Vorteil sind Circular-Spline und Dynamic-Spline axial versetzt zur Getriebemittel-Längsachse angeordnet.

Nach einer anderen Ausgestaltung der Erfindung weisen Flex-Spline und Circular-Spline insbesondere geringfügig unterschiedliche Zähnezahl der ineinandergreifenden Verzahnung auf.

Dabei ist der Dynamic-Spline drehfest mit der Abtriebswelle verbunden.

Sofern das Getriebe als Umlaufrädergetriebe oder als Planetengetriebe mit schwimmender Lagerung der Planetenräder ohne Steg zur Führung der Planetenräder beziehungsweise für den Drehmomentabgriff ausgebildet ist, also beispielsweise zu der Klasse der Wolfrom-Getriebe zu rechnen ist, stehen die Planetenräder mit einer Innenverzahnung eines geteilten Hohlrades in Eingriff. obwohl bereits zwei Planetenräder zum Einsatz gelangen können, bietet es sich an, drei Planetenräder zu verwenden, wodurch sich der Vorteil ergibt, daß das Sonnenrad durch die Planetenräder statisch bestimmt gelagert ist. Auch können die Planetenräder ebenfalls in radialer Richtung federnd ausgebildet sein, um damit Spiel-, Verschleiß- und Fertigungsungenauigkeiten auszugleichen.

Von Vorteil ist das Hohlrad in ein gehäusefestes Hohlrad sowie ein Abtriebshohlrad aufgeteilt, wobei die beiden Hohlräder axial versetzt zur Getriebemittel-Längsachse angeordnet sind.

Bevorzugt weisen das gehäusefeste Hohlrad und das Abtriebshohlrad eine insbesondere geringfügig unterschiedliche Zähnezahl der in die Zähne der Planetenräder eingreifenden Verzahnung auf.

Von Vorteil ist das Abtriebshohlrad drehfest mit der Abtriebswelle verbunden beziehungsweise einstückiger Bestandteil dieser Abtriebswelle.

Schließlich erweist es sich als vorteilhaft, daß die Planetenräder schwimmend gelagert sind.

Weitere Merkmale, Vorteile, Anwendungsmöglichkeiten und Ausgestaltungen der vorliegenden Erfindung ergeben sich aus der nachfolgenden Beschreibung eines Ausführungsbeispieles anhand der Figuren. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: ein Ausführungsbeispiel eines erfindungsgemäßen Mikrogetriebes in Schnittdarstellung,
- Figur 2: ein Spannungswellen- Getriebe in Topfbauweise (Figur 2a) und in Flachbauweise (Figur 2b), jeweils in Schnittdarstellung, nach dem Stand der Technik,
- Figur 3: eine schematische Darstellung eines Harmonic Drive-Getriebes mit einem Wavegenerator bestehend aus Sonnenrad und zwei Planetenrädern zur Veranschaulichung der Funktionsweise,
- Figur 4: eine schematische Darstellung zur Erläuterung der Funktionsweise eines Planetengetriebes mit schwimmender Lagerung der Planetenräder ohne Steg, zum Beispiel eines Wolfrom-Getriebes,
- Figur 5: das Getriebe der Figur 4 in Schnittdarstellung und
- Figur 6: ein Ausführungsbeispiel eines erfindungsgemäßen Wolfrom-Getriebes ebenfalls in Schnittdarstellung.

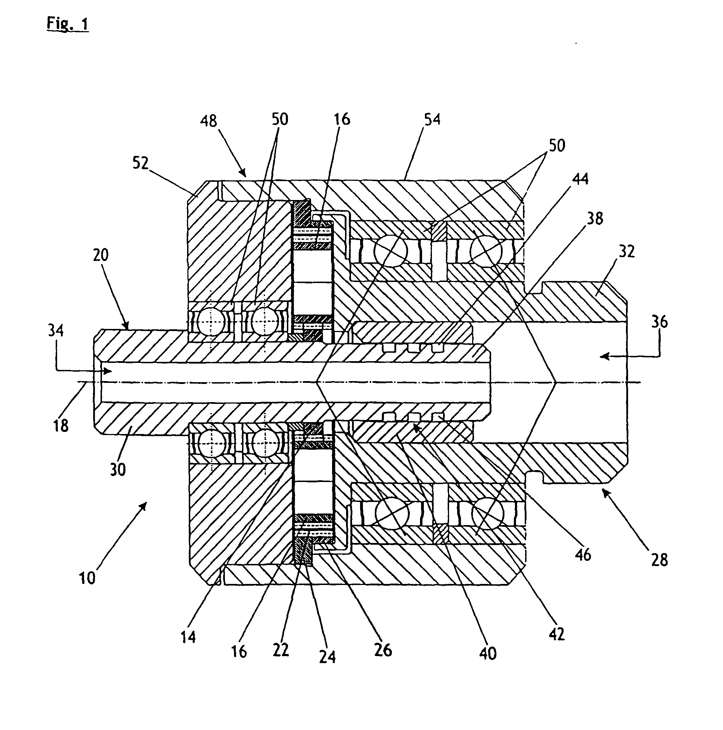

Die grundsätzliche Funktionsweise von Getrieben 10, insbesondere Mikrogetrieben, nach dem Harmonic Drive(eingetragene Marke)-Prinzip in Topfbauweise oder Flachbauweise wurde bereits eingangs näher erläutert, so daß auf die Figuren 2 und 3 im weiteren nicht näher einzugehen ist. Im übrigen werden bei den Ausführungsbeispielen nach dem Stand der Technik gemäß Figuren 2 und 3 zu dem Ausführungsbeispiel nach der vorliegenden Erfindung gemäß Figur 1 zur Bezeichnung gleicher Bauteile identische Bezugsziffern verwendet, so daß die Getriebe nach den Figuren 2 und 3, insbesondere in Verbindung mit dem eingangs genannten Stand der Technik selbsterklärend sind.

Das Getriebe 10 beziehungsweise Mikrogetriebe nach dem Harmonic Drive-Prinzip gemäß Figur 1 ist in Flachbauweise aufgebaut und besitzt einen Wavegenerator 12, der aus einem Planetengetriebe bestehend aus einem Sonnenrad 14 und wenigstens zwei mit dem Sonnenrad 14 in Eingriff stehenden Planetenrädern 16 besteht. Das Sonnenrad 14 ist im Ausführungsbeispiel der Figur 1 ringförmig ausgebildet und sitzt drehfest auf einer zentrisch bezüglich einer Getriebemittellängsachse 18 angeordneten Antriebswelle 20.

Natürlich besteht auch die Möglichkeit, daß das Sonnenrad 14 insbesondere einstückiger Bestandteil dieser Antriebswelle 20 ist.

Die Planetenräder 16 stehen mit einer Innenverzahnung eines ringförmigen Flex-Spline 22 in Eingriff, der seinerseits eine Außenverzahnung besitzt. Diese Außenverzahnung des Flex-Spline 22 steht mit der Innenverzahnung eines ringförmigen Circular-Spline 24 sowie der Innenverzahnung eines ringförmigen Dynamic-Spline 26 in Eingriff. Circular-Spline 24 und Dynamic-Spline 26 weisen jeweils Ringform auf und sind bezüglich der Getriebemittellängsachse axial versetzt zueinander angeordnet. Flex-Spline 22 und Circular-Spline 24 weisen eine geringfügig unterschiedliche Zahl der ineinander eingreifenden Verzahnung auf, beispielsweise beträgt der Zahnzahlunterschied 2, während der Dynamic-Spline 26 dieselbe Zahnzahl wie der Flex-Spline 22 aufweist und somit als Abtriebselement dient. Der Dynamic-Spline 26 ist drehfest mit einer Abtriebswelle 28 verbunden. Im vorliegenden Ausführungsbeispiel ist, wie aus Figur 1 ersichtlich, der ringförmige Dynamic-Spline 26 in einer topfartig aufgeweiteten Aufnahme der Abtriebswelle 28 angeordnet, liegt mit seiner Außenwandung der Innenwandung der topfförmigen Aufnahme an und ist mit dieser drehfest beziehungsweise starr verbunden. Es bleibt zu erwähnen, daß nicht nur die Antriebswelle 20, sondern auch die Abtriebswelle 28 im wesentlichen zentrisch bezüglich der Getriebemittellängsachse 18 angeordnet sind.

Um Medien oder Informationen durch dieses Getriebe 10 hindurchleiten zu können, sind Antriebswelle 20 sowie Abtriebswelle 28 jeweils als Hohlwelle 30, 32 mit einer durchgängigen Bohrung 34, 36 oder einem sonstigen Kanal ausgebildet. Somit wird für Mikrogetriebe erstmalig die Möglichkeit bereitgestellt, durch das Drehzentrum des Antriebs Medien, Informationen oder dergleichen zu transportieren, so daß beispielsweise Laserstrahlung, optische Fasern, Wellen, Versorgungsleitungen oder auch Medien direkt auf der zentralen rotatorischen Achse durch das Getriebe geführt werden können. Es ist somit entbehrlich, diese Informationen, Medien oder dergleichen um das Getriebe herumzuführen, was mit erheblich konstruktivem Aufwand und Bauraumbedarf verbunden ist.

Wie aus Figur 1 weiterhin ersichtlich ist, taucht die Antriebswelle 20 mit einem freien, zur Abtriebswelle 28 weisenden Endabschnitt 38 in die Bohrung 36 beziehungsweise den Kanal der Abtriebswelle 28 ein. Weiterhin ist der freie Endabschnitt 38 der Antriebswelle 20 gemäß dem Ausführungsbeispiel der Figur 1 von einer in der Bohrung 36 beziehungsweise dem Kanal der Abtriebswelle 28 sitzenden Buchse 40 aufgenommen. Zwischen Antriebswelle 20 und Abtriebswelle 28 ist ein Dichtungssystem 42 vorgesehen, welches es ermöglicht, daß trotz der Relativbewegung von Antriebswelle 20 und Abtriebswelle 28 ein Medium unmittelbar durch die beiden Hohlwellen 30, 32 geführt werden kann. Obwohl durchaus konventionelle Dichtungssysteme, zum Beispiel Gummidichtungen oder dergleichen, bei denen eine elastische Dichtfläche zur Abdichtung zwischen die gegeneinander beweglichen Komponenten gepreßt wird, zum Einsatz kommen kann, besitzen derartige konventionelle Dichtungen gerade im Hinblick auf Mikrosysteme den Nachteil, daß ein erhebliches zusätzliches Reibungsmoment in der Dichtung erzeugt wird, die Dichtungsflächen verschleißen und damit die Dichtung allmählich undicht wird. Insoweit ist nach dem bevorzugten Ausführungsbeispiel der Figur 1 das Dichtungssystem 42 als berührungslose Dichtung, bevorzugt als Labyrinthdichtung 44 ausgebildet, wobei bevorzugt mehrere bezüglich der Getriebemittellängsachse versetzt angeordnete Ringnuten in der Außenwandung der Antriebswelle 20 oder der Innenwandung der Buchse 40 beziehungsweise der Abtriebswelle 28 angeordnet sind.

Antriebswelle 20 und/oder Abtriebswelle 28 sind in einem Gehäuse 48 des Getriebes mittels Drehlagern 50, insbesondere bevorzugt O-verspannten Radialrillenkugellagern gelagert. Weiterhin sind die Planetenräder 16 als Ring ausgebildet, die in radialer Richtung Federelastizität besitzen. Das Gehäuse 48 des Getriebes 10 besteht aus zwei Gehäuseteilen 52, 54, die bevorzugt ringförmig ausgebildet sind, topfartig ineinandergreifen und zwischen sich den Wavegenerator 12, Sonnen- und Planetenräder 14, 16 sowie Flex-, Circular- und Dynamic-Spline 22, 24, 26 aufnehmen.

Das als Mikrogetriebe ausgebildete Getriebe 10 zeichnet sich durch einen Durchmesser von weniger als 10 mm (bevorzugt ca. 8 mm) einer Höhe von ca. 1 mm, einer Übersetzung von ca. 100 bis ca. 1.500 (bevorzugt etwa 500 bis 1.000) und einem Zahnmodul von kleiner 100 (30 bis 40) µm, bevorzugt 34 µm aus und wird bevorzugt nach dem LIGA-Verfahren hergestellt.

Die erfindungsgemäße Ausgestaltung von Antriebswelle 20 und Abtriebswelle 28 jeweils als Hohlwelle 30, 32 mit durchgängiger Bohrung 34, 36 oder durchgängigem Kanal läßt sich auch bei anderen Umlaufrädergetrieben beziehungsweise Planetengetrieben mit schwimmender Lagerung der Planetenräder 16 realisieren.

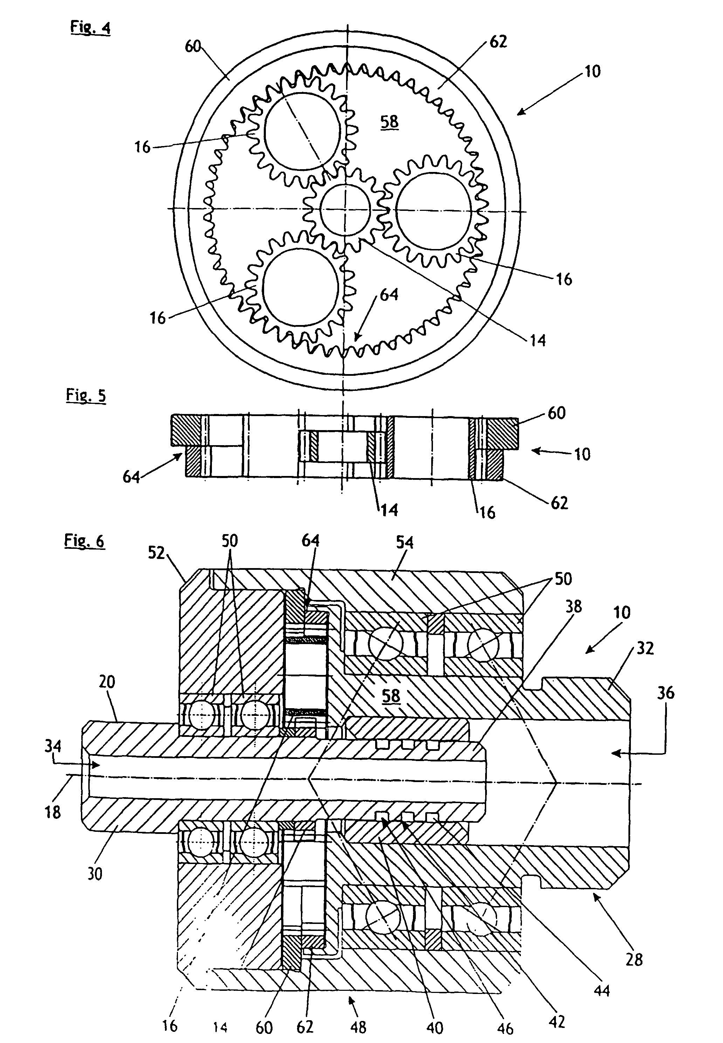

In den Figuren 4 und 5 ist in schematischer Darstellung ein sogenanntes Wolfrom-Getriebe 58 dargestellt, welches in einer einfachen Ausführungsform sehr ähnlich zum Aufbau des vorbeschriebenen Spannungswellen-Getriebes 56 ist. Insoweit sind auch gleiche Bauteile mit gleichen Bezugsziffern gekennzeichnet. Nachfolgend wird daher lediglich auf die Unterschiede im Getriebeaufbau eingegangen.

Im wesentlichen entfällt bei dem Wolfrom-Getriebe gemäß der erfindungsgemäßen Ausführungsform der Figur 6 der Flex-Spline 22 des Ausführungsbeispiels der Figur 1. Das Wolfrom-Getriebe 58 weist ein geteiltes Hohlrad 64 auf, welches aus einem gehäusefesten Hohlrad 60 sowie einem Abtriebshohlrad 62 gebildet ist, die axial versetzt zur Getriebe-Mittel-Längsachse 18 angeordnet sind. Das gehäusefeste Hohlrad 60 sowie das Abtriebshohlrad 62 besitzen eine geringfügig unterschiedliche Zähnezahl der in die Zähne der Planetenräder 16 eingreifenden Verzahnung. Das Abtriebshohlrad 62 ist drehfest mit der Abtriebswelle 28 verbunden, wobei die bevorzugt drei Planetenräder 16 schwimmend gelagert sind.

Wird das Sonnenrad 14 über eine Drehbewegung der Antriebswelle 20 in Drehung versetzt, überträgt sich diese Bewegung auf die bevorzugt drei Planetenräder 16, deren Außenverzahnung mit der Innenverzahnung des Sonnenrades 14 in Eingriff steht. Gleichfalls stehen die Planetenräder 16 mit ihrer Außenverzahnung mit der Innenverzahnung des Hohlrades 64, das heißt des gehäusefesten Hohlrades 60 sowie des Abtriebshohlrades 62 in Eingriff. Insoweit wird dann das Abtriebshohlrad 62 entsprechend der individuell einzustellenden Übersetzungsverhältnisse in eine Rotation um die Getriebe-Mittel-Längsachse 18 versetzt, die aufgrund der drehfesten Verbindung des Abtriebshohlrades 62 mit der Abtriebswelle 28 entsprechend auf diese übertragen wird.

Auch bei diesem modifizierten Wolfrom-Getriebe 58 besteht ein großer Vorteil darin, daß Antriebswelle 20 sowie Abtriebswelle 28 jeweils als Hohlwellen 30, 32 ausgebildet sind und einen durchgängigen Kanal aufweisen, so daß Informationen oder beispielsweise fluide Medien durch das Getriebe 10 hindurchgeleitet werden können.

### Bezugszeichenliste

- 10: Getriebe
- 12: Wavegenerator
- 14: Sonnenrad
- 16: Planetenrad
- 18: Getriebemittellängsachse
- 20: Antriebswelle
- 22: Flex-Spline
- 24: Circular-Spline
- 26: Dynamic-Spline
- 28: Abtriebswelle
- 30: Hohlwelle
- 32: Hohlwelle
- 34: Bohrung
- 36: Bohrung
- 38: Endabschnitt
- 40: Buchse
- 42: Dichtungssystem
- 44: Labyrinthdichtung
- 46: Ringnut
- 48: Gehäuse
- 50: Drehlager
- 52: Gehäuseteile
- 54: Gehäuseteile
- 56: Spannungswellen-Getriebe
- 58: Wolfrom-Getriebe
- 60: gehäusefestes Hohlrad
- 62: Abtriebshohlrad
- 64: Hohlrad

## Patentansprüche

1. Mikrogetriebe nach dem Prinzip des Spannungswellen-Getriebes (56) oder Wolfrom-Getriebe (58) in Flachbauweise, welches ein Planetengetriebe bestehend aus einem Sonnenrad (14) und wenigstens zwei oder mehreren mit dem Sonnenrad (14) in Eingriff stehenden Planetenrädern (16) aufweist, wobei das Sonnenrad (14) drehfest auf einer zentrisch bezüglich einer Getriebemittellängsachse (18) angeordneten Antriebswelle (20) sitzt oder Bestandteil dieser Antriebswelle (20) ist, die Planetenräder (16) mittelbar oder unmittelbar mit einer Verzahnung in Eingriff stehen, die drehfest mit einer Abtriebswelle (28) verbunden ist, welche zentrisch bezüglich der Getriebemittellängsachse angeordnet ist und die Planetenräder (16) schwimmend gelagert und als Ring ausgebildet sind, der in radialer Richtung Federelastizität besitzt, **dadurch gekennzeichnet, dass** Antriebswelle (20) und Abtriebswelle (28) jeweils als Hohlwelle (30, 32) mit durchgängiger Bohrung (34, 36) oder durchgängigem Kanal ausgebildet sind, wobei ein Gehäuse (48) des Getriebes aus zwei Gehäuseteilen (52, 54) besteht, die topfartig ineinander greifen und zwischen sich die Getrieberäder aufnehmen, und Antriebswelle (20) oder Abtriebswelle (28) in dem Gehäuse (48) mittels Drehlagern (50) gelagert sind.

2. Getriebe nach Anspruch 1, **dadurch gekennzeichnet, dass** die Antriebswelle (20) mit einem freien, zur Abtriebswelle (28) weisenden Endabschnitt (38) in die Bohrung (36) der Abtriebswelle (28) eintaucht.

3. Getriebe nach Anspruch 2, **dadurch gekennzeichnet, dass** der freie Endabschnitt (38) der Antriebswelle (20) von einer in der Bohrung (36) beziehungsweise dem Kanal der Abtriebswelle (28) sitzenden Buchse (40) aufgenommen ist.

4. Getriebe nach einem der vorhergehenden Ansprüche, **dadurch gekennzeichnet, dass** zwischen Antriebswelle (20) und Abtriebswelle (28) ein Dichtungssystem (42) angeordnet ist.

5. Getriebe nach Anspruch 4, **dadurch gekennzeichnet, dass** das Dichtungssystem (42) als berührungslose Dichtung, bevorzugt als Labyrinthdichtung (44) ausgebildet ist, wobei bevorzugt mehrere bezüglich der Getriebemittellängsachse (18) versetzt angeordnete Ringnuten in der Außenwandung der Antriebswelle (20) oder Innenwandung der Buchse (40) beziehungsweise der Abtriebswelle (28) angeordnet sind.

6. Getriebe nach einem der vorhergehenden Ansprüche, **dadurch gekennzeichnet, dass** Antriebswelle (20) und Abtriebswelle (28) in dem Gehäuse (48) des Getriebes mittels Drehlagern (50) gelagert sind.

7. Getriebe nach Anspruch 6, **dadurch gekennzeichnet, dass** die Drehlager (50) als O-verspannte Radialrillenkugellager ausgebildet sind.

8. Getriebe nach einem der vorhergehenden Ansprüche, **dadurch gekennzeichnet, dass** die Gehäuseteile (52, 54) ringförmig ausgebildet sind.

9. Als Mikrogetriebe ausgebildetes Getriebe nach einem der vorhergehenden Ansprüche, **gekennzeichnet durch** einen Durchmesser von weniger als 10 mm (bevorzugt ca. 8 mm) und/oder einer Höhe von ca. 1 mm und/oder einer Übersetzung von ca. 100 bis ca. 1.500 und/oder einem Zahnmodul von 30 bis 40 µm, bevorzugt ca. 34 µm.

10. Mikrogetriebe nach einem der vorhergehenden Ansprüche, hergestellt mittels des LIGA-Verfahrens.

11. Mikrogetriebe nach einem der vorhergehenden Ansprüche, **dadurch gekennzeichnet, dass** das Getriebe (10) als Spannungswellen-Getriebe (56) ausgebildet ist und die Planetenräder (16) mit einer Innenverzahnung eines ringförmigen Flex-Spline (22) in Eingriff stehen.

12. Mikrogetriebe nach Anspruch 11, **dadurch gekennzeichnet, dass** der Flex-Spline (22) eine Außenverzahnung aufweist, die mit der Innenverzahnung eines ringförmigen Circular-Spline (24) sowie der Innenverzahnung eines ringförmigen Dynamic-Spline (26) in Eingriff steht.

13. Mikrogetriebe nach Anspruch 12, **dadurch gekennzeichnet, dass** Circular-Spline (24) und Dynamic-Spline (26) axial versetzt zur Getriebe-Mittel-Längsachse (18) angeordnet sind.

14. Mikrogetriebe nach Anspruch 12 oder 13, **dadurch gekennzeichnet, dass** Flex-Spline (22) und Circular-Spline (24) insbesondere geringfügig unterschiedliche Zähnezahl der ineinandergreifenden Verzahnung aufweisen.

15. Mikrögetriebe nach einem der vorhergehenden Ansprüche 12 bis 14, **dadurch gekennzeichnet, dass** der Dynamic-Spline (26) drehfest mit der Abtriebswelle (28) verbunden ist.

16. Mikrogetriebe nach einem der vorhergehenden Ansprüche 1 bis 10, **dadurch gekennzeichnet, dass** das Getriebe (10) als Wolfrom-Getriebe (58) ausgebildet ist und die bevorzugt drei Planetenräder (16) mit einer Innenverzahnung eines geteilten Hohlrades (64) in Eingriff stehen.

17. Mikrogetriebe nach Anspruch 16, **dadurch gekennzeichnet, dass** das Hohlrad (64) ein gehäusefestes Hohlrad (16) sowie ein Abtriebshohlrad (62) aufweist, die axial versetzt zur Getriebe-Mittel-Längsachse (18) angeordnet sind.

18. Mikrogetriebe nach Anspruch 17, **dadurch gekennzeichnet, dass** das gehäusefeste Hohlrad (60) und das Abtriebshohlrad (62) eine insbesondere geringfügig unterschiedliche Zähnezahl der in die Zähne der Planetenräder (16) eingreifenden Verzahnung aufweisen.

19. Mikrogetriebe nach einem der vorhergehenden Ansprüche 17 oder 18, **dadurch gekennzeichnet, dass** das Abtriebshohlrad (62) drehfest mit der Abtriebswelle (28) verbunden ist.

## Claims

1. Micro-transmission according to the principle of the stress wave transmission (56) or Wolfrom transmission (58) in flat mode of construction, which comprises a planetary gear consisting of a sun wheel (14) and at least two or more planet wheels (16) disposed in engagement with the sun wheel (14), wherein the sun wheel (14) is seated in rotationally fixed manner on a drive shaft (20) arranged centrally with respect to a transmission centre longitudinal axis (18) or is a component of this drive shaft (20), the planet wheels (16) are disposed directly or indirectly in engagement with a toothing connected in rotationally fixed manner with a driven shaft (28), which is arranged centrally with respect to the transmission centre longitudinal axis, and the planet wheels (16) are mounted to be floating and formed as a ring which has resilience in radial direction, **characterised in that** the drive shaft (20) and driven shaft (28) are each constructed as a hollow shaft (30, 32) with a continuous bore (34, 36) or continuous channel, wherein a housing (48) of the transmission consists of two housing parts (52, 54) which interengage in pot-like manner and receive the gearwheels therebetween, and drive shaft (20) or driven shaft (28) is mounted in the housing (48) by means of rotary bearings (40).

2. Transmission according to claim 1, **characterised in that** the drive shaft (20) enters into the bore (36) of the driven shaft (28) by a free end section (38) facing towards the driven shaft (28).

3. Transmission according to claim 2, **characterised in that** the free end section (38) of the drive shaft (20) is received by a bush (40) seated in the bore (36) or the channel of the driven shaft (28).

4. Transmission according to one of the preceding claims, **characterised in that** a sealing system (42) is arranged between drive shaft (20) and driven shaft (28).

5. Transmission according to claim 4, **characterised in that** the sealing system (42) is constructed as a contactless seal, preferably as a labyrinth seal (44), wherein preferably several annular grooves, which are arranged to be offset with respect to the transmission centre longitudinal axis (18), are disposed in the outer wall of the drive shaft (20) or inner wall of the bush (40) or the driven shaft (28).

6. Transmission according to one of the preceding claims, **characterised in that** drive shaft (20) and driven shaft (28) are mounted in the housing (48) of the transmission by means of rotary bearings (50).

7. Transmission according to claim 6, **characterised in that** the rotary bearings (50) are constructed as O-braced radial groove ball bearings.

8. Transmission according to one of the preceding claims, **characterised in that** the housing parts (52, 54) are of annular construction.

9. Transmission, which is constructed as a micro-transmission, according to one of the preceding claims, **characterised by** a diameter of less than 10 millimetres (preferably approximately 8 millimetres), and/or a height of approximately 1 millimetre and/or a translation of approximately 100 to approximately 1,500 and/or a tooth modulus of 30 to 40 microns, preferably approximately 34 microns.

10. Micro-transmission according to one of the preceding claims, produced by means of the LIGA method.

11. Micro-transmission according to one of the preceding claims, **characterised in that** the transmission (10) is constructed as a stress wave transmission (56) and the planet wheels (16) are disposed in engagement with an internal toothing of an annular flex-spline (22).

12. Micro-transmission according to claim 11, **characterised in that** the flex-spline (22) has an outer toothing which is disposed in engagement with the inner toothing of an annular circular-spline (24) as well as the internal toothing of an annular dynamic-spline (26).

13. Micro-transmission according to claim 12, **characterised in that** circular-spline (24) and dynamic-spline (26) are arranged to be axially offset relative to the transmission centre longitudinal axis (18).

14. Micro-transmission according to claim 12 or 13, **characterised in that** the flex-spline (22) and circular-spline (24) in particular have a slight difference in tooth number of the interengaging toothings.

15. Micro-transmission according to one of the preceding claims 12 to 14, **characterised in that** the dynamic-spline (26) is rotationally fixedly connected with the driven shaft (28).

16. Micro-transmission according to one of the preceding claims 1 to 10, **characterised in that** the transmission (10) is constructed as a Wolfrom transmission (58) and the preferably three planet wheels (16) are disposed in engagement with an internal toothing of a divided internal wheel (64).

17. Micro-transmission according to claim 16, **characterised in that** the internal wheel (64) comprises an internal wheel (16) fixed relative to the housing as well as a driven internal wheel (62), which are arranged to be axially offset relative to the transmission centre longitudinal axis (18).

18. Micro-transmission according to claim 17, **characterised in that** the internal wheel (60) fixed relative to the housing and the driven internal wheel (62) in particular have a slight difference in tooth number of the toothing engaging in the teeth of the planet wheels (16).

19. Micro-transmission according to one of the preceding claims 17 and 18, **characterised in that** the driven internal wheel (62) is rotationally fixedly connected with the driven shaft (28).

## Revendications

1. Micro-engrenage selon le principe de l'engrenage à onde de déformation (56) ou engrenage Wolfrom (58) de construction plate, qui présente un système d'engrenage planétaire composé d'une roue solaire (14) et d'au moins deux ou plusieurs roues planétaires (16) engrenées avec la roue solaire (14), la roue solaire (14) étant placée de manière fixe sur un arbre d'entraînement (20) disposé de manière centrale par rapport à un axe longitudinal (18) du système d'engrenage ou étant un élément constitutif de cet arbre d'entraînement (20), les roues planétaires (16) étant directement ou indirectement engrenées avec une denture qui est reliée de manière fixe à un arbre mené (28) qui est disposé de manière centrale par rapport à l'axe longitudinal du système d'engrenage, et les roues planétaires (16) étant montées de manière flottante et conçues sous la forme d'un anneau qui possède une élasticité dans le sens radial, **caractérisé en ce que** l'arbre d'entraînement (20) et l'arbre mené (28) sont chacun conçus sous la forme d'un arbre creux (30, 32) comportant un alésage débouchant (34, 36) ou un conduit débouchant, un carter (48) de l'engrenage étant formé de deux parties de carter en forme de coupelle (52, 54) qui s'engagent l'une dans l'autre et logent entre elles les roues d'engrenage, et l'arbre d'entraînement (20) ou l'arbre mené (28) étant monté dans le carter (48) au moyen de paliers rotatifs (50).

2. Engrenage selon la revendication 1, **caractérisé en ce que** l'arbre d'entraînement (20) pénètre dans l'alésage (36) de l'arbre mené (28) par une section d'extrémité libre (38) orientée vers l'arbre mené (28).

3. Engrenage selon la revendication 2, **caractérisé en ce que** la section d'extrémité libre (38) de l'arbre d'entraînement (20) est reçue par une douille (40) placée dans l'alésage (36) et/ou le conduit de l'arbre mené (28).

4. Engrenage selon une des revendications précédentes, **caractérisé en ce qu'**entre l'arbre d'entraînement (20) et l'arbre mené (28) est disposé un système de joint (42).

5. Engrenage selon la revendication 4, **caractérisé en ce que** le système de joint (42) est conçu sous la forme d'un joint sans contact, de préférence sous la forme d'un joint labyrinthe (44), de préférence plusieurs rainures annulaires disposées de manière décalée par rapport à l'axe longitudinal (18) du système d'engrenage étant disposées sur la paroi extérieure de l'arbre d'entraînement (20) ou sur la paroi intérieure de la douille (40) respectivement de l'arbre mené (28).

6. Engrenage selon une des revendications précédentes, **caractérisé en ce que** l'arbre d'entraînement (20) et l'arbre mené (28) sont montés dans le carter (48) de l'engrenage au moyen de paliers rotatifs (50).

7. Engrenage selon la revendication 6, **caractérisé en ce que** les paliers rotatifs (50) sont conçus sous la forme de roulements rainurés à billes à contact radial montés en O.

8. Engrenage selon une des revendications précédentes, **caractérisé en ce que** les parties (52, 54) du carter sont conçues sous forme annulaire.

9. Engrenage conçu sous la forme d'un micro-engrenage selon une des revendications précédentes, **caractérisé par** un diamètre inférieur à 10 mm (de préférence d'environ 8 mm) et/ou une hauteur d'environ 1 mm et/ou un rapport de transmission d'environ 100 à environ 1 500 et/ou un module de la denture de 30 à 40 µm, de préférence d'environ 34 µm.

10. Micro-engrenage selon une des revendications précédentes, fabriqué en utilisant le procédé LIGA.

11. Micro-engrenage selon une des revendications précédentes, **caractérisé en ce que** l'engrenage (10) est conçu sous la forme d'un engrenage à onde de déformation (56), et **en ce que** les roues planétaires (16) sont engrenées avec une denture intérieure d'une cannelure élastique (22).

12. Micro-engrenage selon la revendication 11, **caractérisé en ce que** la cannelure élastique (22) présente une denture extérieure qui est engrenée avec la denture intérieure d'une cannelure circulaire (24) de forme annulaire, ainsi qu'avec la denture intérieure d'une cannelure dynamique (26) de forme annulaire.

13. Micro-engrenage selon la revendication 12, **caractérisé en ce que** la cannelure circulaire (24) et la cannelure dynamique (26) sont disposées en décalage axial par rapport à l'axe longitudinal (18) du système d'engrenage.

14. Micro-engrenage selon la revendication 12 ou 13, **caractérisé en ce que** la denture de la cannelure élastique (22) et la denture de la cannelure circulaire (24) engrenées l'une dans l'autre présentent un nombre de dents en particulier légèrement différent.

15. Micro-engrenage selon une des revendications précédentes 12 à 14, **caractérisé en ce que** la cannelure dynamique (26) est reliée fixement à l'arbre mené (28).

16. Micro-engrenage selon une des revendications précédentes 1 à 10, **caractérisé en ce que** l'engrenage (10) est conçu sous la forme d'un engrenage Wolfrom (58), et **en ce que** les roues planétaires (16), de préférence au nombre de trois, engrènent la denture intérieure d'une roue creuse (64).

17. Micro-engrenage selon la revendication 16, **caractérisé en ce que** la roue creuse (64) présente une roue creuse (16) solidaire du carter, ainsi qu'une roue creuse menée (62) qui sont disposées en décalage par rapport à l'axe longitudinal (18) du système d'engrenage.

18. Micro-engrenage selon la revendication 17, **caractérisé en ce que** la denture de la roue creuse (60) solidaire du carter et la denture de la roue creuse menée (62) engrenant les dents des roues planétaires (16) présentent un nombre de dents en particulier légèrement différent.

19. Micro-engrenage selon une des revendications précédentes 17 ou 18, **caractérisé en ce que** la roue creuse menée (62) est reliée fixement à l'arbre mené (28).
